# EUROPEAN PATENT APPLICATION

(11) **EP 0 844 579 A2**
(43) Date of publication of application: **27.05.1998**
(21) Application number: 97309383.4
(22) Date of filing: 20.11.1997
(51) Int. Cl.: G06F 17/60

(54) **Method and apparatus of controlling reservation for goods and the like**

(30) Priority: 20.11.1996 JP 309670/96; 25.04.1997 JP 144454/97
(71) Applicant: Daishin Frame Inc., Osaka 550 (JP)
(72) Inventor: Sakurai,Yasuo c/o Daishin Frame Inc., Nishi-ku ,Osaka 550 (JP)
(74) Representative: Smith, Gillian Ruth

(57) **Abstract**

A method of controlling the reservation for goods and the like includes the steps of setting and registering individual identification means for each individual applicable to individual data of an unspecified number of the general public, reserving tangible and/or intangible various goods and the like controlled by an information data control unit (2) from an individual whose individual identification means have been set and registered, through communication means, setting a reservation code to the reservation data for each of various goods and the like reserved and notifying the individual, receiving various urgent information data such as the change or cancel of the reservation data to which the reservation code has been set from at least either the individual side or the information data control unit (2) side, and changing or canceling the contents of the reservation data, and sending through the communication means the contents of the reservation data to notify the individual.

An apparatus practicing the above method will also be provided.

## Description

### BACKGROUND OF THE INVENTION

### Field of the Invention

The present invention relates to a method and apparatus of controlling the reservation for goods and the like, and more particularly to a method and apparatus of controlling the reservation for goods and the like, which perform the reservation for tangible and/or intangible various goods and the like, or for the control of various data on various goods and the like through communication means, and thereafter where there occurs a situation in that the contents and the like of various goods such as reserved goods and services, or the contents of various data on various goods and the like are changed by the reserving party side, as well as even where an emergency situation such as various troubles occurs on the other party side for providing various goods such as reserved goods and services, which can achieve smoothly and reliably the purpose of the both reserving-party side and reserved side.

### Description of the Prior Art

Heretofore, as an art of reserving tangible and/or intangible various goods and the like, as mentioned above, there is, for example, the one described in the official gazette of Japanese Patent Publication No. 6-103914.

That is, the art described in the above-mentioned official gazette, whose patent was filed by the present applicant, and whose field to be applied is not limited at all, is most suitable particularly for reserving of medical examination and the like in hospitals and the like.

Such art, when applied, for example, as a reservation system for hospitals and the like, includes the steps of: sending a reservation for the order of the date and time of visiting hospital and/or medical examination and the like for each patient, who calls the extension-line or the outside-line telephone within a hospital and the like, by an order setting computer connected to the extension-line and/or the outside-line telephones; thereafter inputting the identification data for each patient who reserved the order on that day of reservation, into the order setting computer, thereby confirming the reservation for the order of the date and time of visiting hospital and/or medical examination and the like for each patient; thereafter setting for each of the reserving patient a caller provided with calling means which can receive different electromagnetic waves for each of the patient and send an outside notification only when received a specified electromagnetic wave, and then lending the caller to the patient; and thereafter sending identification electromagnetic waves differing for each reservation order inputted into the order setting computer to respective callers provided by the patient according to the order of the date and time of visiting hospital and/or medical examination and the like for each of the reserved patient by means of an automatic calling unit connected to the order setting computer, thereby sequentially calling the calling means of the specified caller.

Thus, according to the art described in the above-mentioned official gazette, a patient or the like having reserved the order of the date and time of visiting hospital and/or medical examination and the like through an order setting computer connected to telephones can reserve a more reliable and correct order of the date and time of visiting hospital and/or medical examination and the like through various information from many special medicines such as internal medicine and surgery sent in real time to the order setting computer, and in addition, the calling of medical examination and the like for each patient waiting for in a waiting room and the like can be reliably performed through callers supplied to the patients and through an automatic calling unit connected to the order setting computer at a precise reserved time without being affected entirely by a noisy environment in the waiting room and the like. Problems to be solved by the Invention

However, in a reservation system having the above-mentioned configuration, there have existed the following problems.

That is, when the reservation system having the above-mentioned configuration is applied to a hospital and the like, the system has an advantage that, regardless of the size of the hospital and the like, the system can issue the reservation for the order of the date and time of visiting hospital and/or medical examination and the like for each patient through telephones, thereby not only reducing at least to one or completely to none of persons who belongs to the hospital and the like, and who is in charge of reservation of the order of medical examination and the like, but also performing reliably the calling of the medical examination of patients and the like waiting for in a waiting room and the like at a precise reservation time without being affected entirely by a noisy environment in the waiting room and the like. However, unfortunately, regardless of the field of art applied, all reservations for the order performed through an order setting computer are not always performed, and thus there may occur an urgent situation in that the contents and the like of various goods such as goods and services reserved through the order setting computer must be changed by the reserving party side, or there may occur an emergency situation such as various troubles on the other party side providing various goods and the like such as goods and services reserved, without being limited to the hospital and the like receiving reservation.

Therefore, even when the reservation system of the above-mentioned configuration is applied to various fields of art without being limited only to the reservation in a hospital and the like, where there occurs a situation in that various goods and the like such as goods and services reserved must be canceled, it is sufficient to notify the order setting computer of the effect, but, for example, where there occurs an urgent situation in that various conditions such as the contents of various goods and the like such as goods and services reserved must be changed by the reserving party side, various reservations stored and controlled in the order setting computer must be once canceled and then a new reservation for various goods and the like be performed again, whereby there may occur a case where, if the time required for reservation becomes even somewhat longer when performing again various reservations having different conditions, various goods and the like such as goods and services to be reserved can not be set on the date and time initially reserved.

Further, the change of the contents of various goods and the like such as goods and services once reserved does not always occurs only on the reserving party side, and an emergency situation such as various troubles may also occur on the other party side for providing various goods such as reserved goods and services, but particularly where an emergency situation such as various troubles occurs on the other party side for providing various goods such as reserved goods and services the follow up to the reserving party is still not considered to be perfect, so that, for example, there may occur a case where the reserving party is notified through a postal matter such as postcards of the emergency situation, and in the worst case, the party may be notified through a reservation window or a goods receiving place of the emergency situation on that day.

Thus, even for the notification through a postal matter of the emergency situation, a loss of several days from reservation performed occurs, and in addition, a notification of the emergency situation at a reservation window or a goods receiving place on that day may not only cause an absolute confidence for the reserving party to be lost, but also cause a damage to be claimed particularly when reserved various goods and the like are very important goods and the like for the reserving party, whereby there has existed a very serious problem that for not only the reserving party performing reservation but also the other party providing various goods such as reserved goods and services, a smooth corrective action is desirable for both the parties to the change of the contents of various reserved goods and the like and to the emergency situation such as various troubles, and particularly the reserving party must be reliably notified in real time not only of the change of the contents of various goods and the like initially reserved, but also of the reserved contents of various goods and the like such as goods and services thereafter changed or canceled.

However the present invention solves all the above-mentioned problems, and the object of the invention is to provide a method and apparatus of controlling the reservation for goods and the like, in which where there occurs a situation in that the contents and the like of various goods such as reserved goods and services are changed by the reserving party side, as well as even where an emergency situation such as various troubles occurs on the other party side for providing various goods such as reserved goods and services, the apparatus can achieve smoothly and reliably the purpose of the both parties in real time for 24 hours through no human power.

### SUMMARY OF THE INVENTION

In accordance with the present invention, there is provided a method of controlling the reservation for goods and the like which includes the steps of setting and registering individual identification means for each individual applicable to individual data of an unspecified number of the general public, reserving tangible and/or intangible various goods and the like controlled by an information data control unit from an individual whose individual identification means have been set and registered, through communication means, setting a reservation code to the reservation data for each of various goods and the like reserved and notifying the individual, receiving various urgent information data such as the change or cancel of the reservation data to which the reservation code has been set from at least one of the individual side and the information data control unit side, and changing or canceling the contents of the reservation data, and sending through the communication means the contents of the reservation data to notify the individual.

The method of the above steps has an advantage that even where an emergency situation such as various troubles occurs on the other party side for providing various goods such as reserved goods and services, the method can not only solve the urgent situation such as various troubles in a smooth manner in 24-hour real time by being understood by both the parties to achieve reliably the purpose intended by both the parties, but also particularly perform reliably the final confirmation for the reservation contents for each individual having performed reservation and control centralizedly and in real time all of reservation data on various goods and the like for each individual of an unspecified number of the general public.

The above, and other objects, features and advantages of the present invention will become apparent from the detailed description thereof read in conjunction with the accompanying drawings.

### BRIEF DESCRIPTION OF THE DRAWINGS

FIG. 1 is a schematic view illustrating an apparatus practicing a method of controlling the reservation for goods and the like in accordance with a first embodiment of the present invention.

FIG. 2 is a schematic view illustrating an apparatus practicing a method of controlling the reservation for goods and the like in accordance with a second embodiment of the present invention.

FIG. 3 is a schematic view illustrating an apparatus practicing a method of controlling the reservation for goods and the like in accordance with a third embodiment of the present invention.

FIGS. 4A and 4B are schematic views illustrating an apparatus practicing a method of controlling the reservation for goods and the like in accordance with another embodiment of the present invention, in which the apparatus is provided in a mobile body in different manners.

FIGS. 5A and 5B are schematic views illustrating an apparatus practicing a method of controlling the reservation for goods and the like in accordance with still another embodiment of the present invention, in which the apparatus is provided in a mobile body in different manners.

### DETAILED DESCRIPTION OF THE PREFERRED EMBODIMENTS

### First Embodiment

In a first embodiment, an apparatus for practicing a method of controlling the reservation for goods and the like in accordance with the present invention is used for reserving a generally available goods such as various tickets and other products.

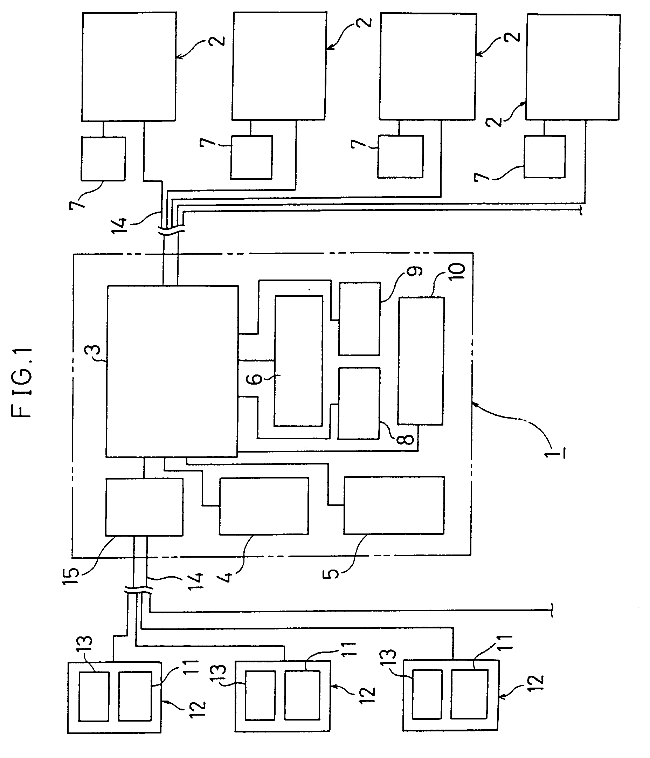

In FIG. 1, numeral 1 designates an apparatus which practices a method of controlling the reservation for goods and the like of the present invention in accordance with the first embodiment, which apparatus is installed at a specified place within an architecture such as a building having business function.

Numeral 2 designates identical type and/or different type information data control units distributed to specified many places in various districts and the like so that various information data are to be individually controlled on the reservation status, the number of possible reservations and the like for each of various goods and the like on the basis of identification codes set for each of various tangible goods (goods having actual form and substance, etc.) and/or various intangible goods (various services, etc.) and the like regardless of the kind of business, which unit is provided individually with a central processing unit (not shown) and an input unit (not shown) for inputting various numerical values and the like to construct information data.

Numeral 3 designates an information data overall control unit which is provided with a central processing unit (not shown) connected through telephone lines (communication means) 14 such as a high speed digital circuit to the respective information data control units 2 so as to be able to read or store in real time or at a specified date and time the information data of the information data control units 2. The information data overall control unit 3 is provided with: an individual data registration unit 4 for setting and registering individual identification means having individual identification codes sequentially set by the information data overall control unit 3 corresponding to each individual data of an unspecified number of the general public set from later-described reservation units 12 which are previously installed in respective general houses and the like, and are connected through general telephone lines (communication means) 14 to a circuit distributor 15; an address registration unit 5 capable of registering communication means for an urgent contact such as telephone number for each individual set and registered; and a reservation data allocation unit 6 for allocating the reservation contents of reserved various goods and the like through the identification codes from the reservation units 12 to a specified information data control unit 2 controlling applicable various goods and the like.

Each of the information data control units 2 is provided with a reservation code setting unit 7 for setting a reservation code to the reservation data including various conditions such as the number of reservations and the delivery date and time of various goods and the like which reservation data are allocated to a specified information data control unit 2 controlling various goods and the like applicable to reservation contents by the reservation data allocation unit 6 and sent to the unit 2.

Numeral 8 designates a reservation code sending unit provided in the information data overall control unit 3 for sending the set reservation code through the reservation code setting unit 7 of the information data control units 2 to individual side having performed reservation; and numeral 9 designates a reservation data control unit which receives various urgent information data such as the change or cancel of reservation data to which a reservation code has been set from at least one of the reservation unit 12 on the individual side and the information data control unit 2 side and can change and/or cancel the contents of the reservation data to which a reservation code has been set.

The information data overall control unit 3 controls the change or cancel of the contents of reservation data in such a manner that at least one of the reservation unit 12 provided on the individual side and the information data control unit 2 is notified through notification means such as voice and display of the fact that various urgent information data have been inputted, before the contents of reservation data are changed or canceled through the reservation data control unit 9, and that the change or cancel of the contents of reservation data is performed after the confirmation of various urgent information data, and after the receiving of the urgent information acknowledgment data inputted from at least one of the reservation unit 12 on the individual side and the information data control unit 2.

Numeral 10 designates a reservation data changed contents sending unit for actuating the address registration unit 5 when some change occurs in the contents of reservation data, and sending the contents of the changed and/or canceled reservation data to the reservation unit 12 for each of respective individuals.

Numeral 11 designates reservation data changed contents notification units respectively provided in the reservation units 12 for notifying respective individuals of the reservation data sent through the reservation data changed contents sending unit 10; and numeral 13 designates an information display and input unit which is provided in each reservation unit 12 and has no keyboard.

The information display and input unit 13 is provided with a function capable of selecting as required and displaying only the required information data at individual option by touching with finger a specified position on a display screen (not shown) through the information offer that at least one of the information data control units 2 and the information data overall control unit 3 sends various information data on tangible and/or intangible various goods and the like controlled thereby through communication means to the individual side.

Further, each of the reservation units 12 is provided with an individual data output function (not shown) for sending individual data of an unspecified number of the general public to the individual data registration unit 4, and with a function capable of outputting both the identification codes set for each of various goods and the like, and the individual identification means set and registered by the individual data registration unit 4 when various goods and the like are reserved.

The apparatus of controlling reservation for various goods and the like in the first embodiment of the present invention is formed of the above-mentioned configuration, so that the apparatus has an advantage that even where an individual of an unspecified number of the general public performs the reservation for various goods, receptions of all reservations through communication means are allowed to be concentrated to one place to make the reservation simple, and that the movement, the total number and the like for each of the reserved various goods and the like can be grasped by the distributed information data control units 2. As a further advantage, where there occurs a situation in that the contents and the like of various goods such as reserved goods and services are changed by the reserving party side, as well as even where an emergency situation such as various troubles occurs on the other party side for providing various goods such as reserved goods and services, the apparatus can not only achieve reliably the purpose of the both parties through each unit in real time for 24 hours through no human power, but also particularly perform reliably the final confirmation for the reservation contents for each individual having performed reservation and control centralizedly and in real time all of reservation data on various goods and the like for each individual of an unspecified number of the general public.

Further, the apparatus of controlling reservation for various goods and the like formed of the above-mentioned configuration is provided with reservation units 12 capable of outputting both the identification codes set for each of various goods and the like, and the individual identification means when various goods are reserved, so that the apparatus has an advantage of performing simply, reliably and in real time the reservation for each of specified various goods and the like.

Also, the reservation unit 12 is provided with an individual data output function for sending individual data to the individual data registration unit 4, so that the apparatus has an advantage that anyone can not only send simply and instantaneously individual data for each individual to the individual data registration unit 4 to set and register the individual identification means for each individual data, but also perform in real time the reservation for each of specified various goods after the individual identification means have been set and registered.

Further, the reservation unit 12 and the reservation data changed contents notification unit 11 are integrally provided, so that the apparatus an advantage that the information on not only the reservation for various goods and the change in the contents of various reserved goods, but also the change in the contents sent from the party side for providing various goods and the like following reservation can be understood in real time, at any time and in any place.

Also, the reservation unit 12 is provided with the information display and input unit 13 having no keyboard, so that the apparatus has an advantage in operability that the apparatus is most suitable particular for the use by patients in bed or elder persons.

Further, the individual data registration unit 4, the address registration unit 5, the reservation data allocation unit 6, the reservation code sending unit 8, the reservation data control unit 9, and the reservation data changed contents sending unit 10 of the apparatus of controlling reservation for various goods or the like formed of the above-mentioned configuration are provided in the information data overall control unit 3, so that the apparatus an advantage that even where the information data control units 2 for controlling individually various goods are linked to each other so as to be multiple-controlled, respective information data control units 2 can be individually controlled by the information data overall control unit 3 without mounting a special hardware to each of the identical and/or different type information data control units 2.

Further, various communication means are general telephone lines 14 and high-speed telephone lines 14 using high speed digital circuit and the like, so that the apparatus has an advantage that the reservation for various goods can be instantaneously and reliably performed only by sending in real time, at any time and in any place the reservation for specified various goods to the information data overall control unit 3 when various goods are reserved.

Further, before the contents of reservation data are changed or canceled, at least one of the reservation unit 12 and the information data control units 2 is notified of the fact that various urgent information data have been inputted, so that the apparatus an advantage that anyone can know reliably and in real time the change or cancel of the reservation contents.

Further, the change or cancel of the contents of reservation data is performed following the reception of the urgent information acknowledgment data inputted from at least one of the reservation unit 12 and the information data control units 2 after various urgent information data are inputted, so that the apparatus has an advantage that the change or cancel of the contents of all reservation data can be performed by decision-making.

Further, at least one of the information data control unit 2 and the information data overall control unit 3 sends various information data on tangible and/or intangible various goods controlled thereby through communication means to the individual side to provide the information, so that the apparatus has an advantage that the individuals of an unspecified number of the general public can know simultaneously and in real time the information on various goods.

Further, the information data are displayed on the reservation unit 12 by personal decision-making, so that the apparatus has an advantage that the information on various goods required for each individual can be obtained efficiently in a short time and without waste.

Also, where the flow of the reservation for various goods and the like sequentially processed through the above-mentioned units is, for example, such that all reservations for various goods and the like issued through communication means from each individual are inputted into the information data overall control unit 3, and thereafter the information data on various goods and the like applicable to reservation are stored in the information data overall control unit 3, a reservation code is set to each of reserved various goods and the like to notify the individual, and the reservation code and the reservation data are sent to the information data control unit 2 for controlling applicable various goods and the like to store; and where the information data on various goods and the like applicable to reservation are not stored in the information data overall control unit 3, the information data control unit 2 for controlling applicable various goods and the like is notified of the effect, and the information data control unit 2 sets a reservation code to the reservation data on various goods and the like and sends the code to the information data overall control unit 3 from which an individual may be notified of the reservation code for reserved various goods and the like, and in this case, there exists an advantage that all of reservation data on various goods and the like for each individual of an unspecified number of the general public can be controlled centralizedly and in real time.

Therefore, the present invention has an advantage that not only when there occurs a situation such that the contents of various goods of reserved goods, service and the like are changed by the reserving-party side, but also when there occurs an urgent situation such as various troubles on the delivery-party side which delivers various goods of reserved goods, service and the like, the urgent situation such as various troubles related to smoothly-reserved goods and the like can be smoothly solved in 24-hour real time by being understood by both the parties to achieve reliably the purpose intended by both the parties, and in addition, particularly, the contents of the reservation can be finally and reliably checked for each individual who performed the reservation.

### Second Embodiment

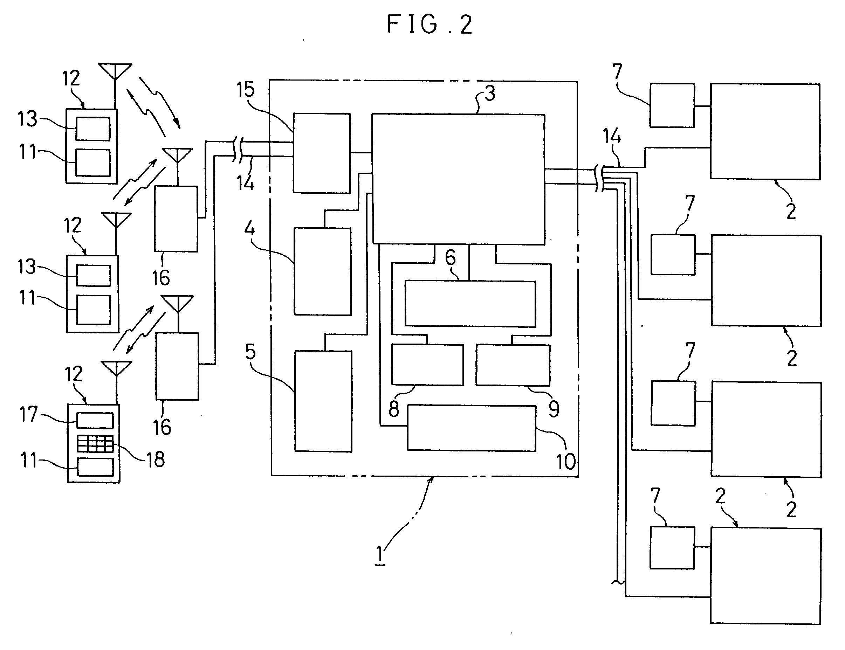

Although in the first embodiment, the reservation unit 12 is the so-called base station type which is previously installed in general house and the like, and connected to the circuit distributor 15 connected through general telephone lines (communication means) to the information data overall control unit 3, the reservation unit 12 in the present invention is not always limited to the base station type, and for example, as shown in Fig. 2, the reservation unit 12 has the information display and input unit 13 having various functions and the reservation data changed contents notification unit 11 as described in the first embodiment, and may be configured so as to be portable and capable of communicating directionally through electromagnetic wave with a data transmitter-receiver unit 16 provided in the information data overall control unit 3 by the use of a battery (not shown) as a drive power source.

The reservation unit 12 may be not always provided with the information display and input unit 13 having not input key (keyboard); and for example, a display screen 17 using LCD and the like and a specified number of required input keys may be provided instead of the information display and input unit 13; and further, the reservation unit 12 including the information display and input unit 13 as with the former and the reservation unit 12 including the display screen 17 and the specified number of required input keys may be mixedly present and used, and in this case, there exists an advantage that the user can select a more easy-to-operate system thereof.

### Third Embodiment

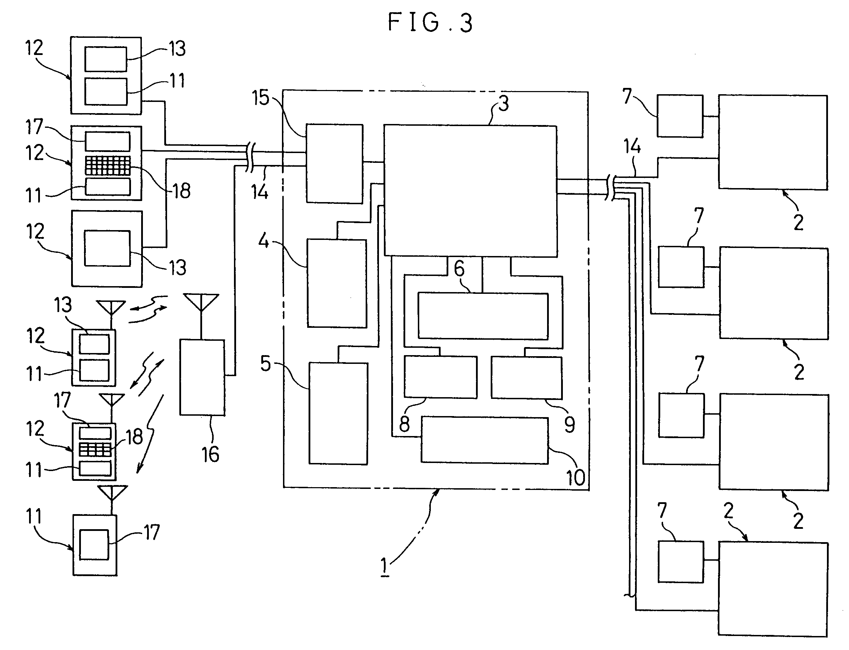

Although in the above-mentioned embodiments, the reservation units 12 and the information data overall control unit 3 use communication means of either the wire-type general telephone lines 14 or the wireless-type data transmitter-receiver unit 16 using electromagnetic wave, they are not always limited to either of the communication means, and for example, as shown in Fig. 3, when the reservation control apparatus is operated, the communication means in which both systems are mixedly present may be used; and further, the reservation unit 12 including the information display and input unit 13 having no input key as the base station type and the reservation data changed contents notification unit 11, and the reservation unit 12 including the display screen 17 and the input keys 18 instead of the information display and input unit 13 and including the reservation data changed contents notification unit 11, and the reservation unit 12 as the base station type including only the information display and input unit 13 may be used

The portably-configured reservation unit 12 including the information display and input unit 13 having no input key and the reservation data changed contents notification unit 11, and the portably-configured reservation unit 12 including the display screen 17 and the input keys 18 instead of the information display and input unit 13 and including the reservation data changed contents notification unit 11, and the portably-configured reservation unit 12 including only the function as the reservation data changed contents notification unit 11 having simply the display screen 17 to receive the electromagnetic wave emitted from the data transmitter-receiver unit 16 all may be mixedly present and used; and in order to control reliably the reservation for various goods and the like and the change or cancel of the reservation contents, both the reservation unit 12 as the base station type provided with only the information display and input unit 13 and the reservation unit 12 which is portable, has the display screen 17, and has only the function as the reservation data changed contents notification unit 11 must be used as a set; and in a word, it will be appreciated that a case where the reservation unit 12 for issuing reservation is provided with the reservation data changed contents notification unit 11 may be applied, or a case where the reservation unit 12 and the reservation data changed contents notification unit 11 are separately provided may be applied, and the combination of both cases and the like are not limited at all.

Although, in the above-mentioned embodiments, corresponding to each of individual data of an unspecified number of the general public sent from the reservation unit 12, individual identification means having an individual identification code set sequentially in the information data overall control unit 3 are set and registered, the individual identification means may be not always set by the individual data and the individual identification code, and for example, the individual identification means may be set by the individual data to be sequentially inputted through various communication means connected to the information data overall control unit 3 and by the individual password (which is set individually by itself) set together with the individual data, and in this case, there exists an advantage that even in either the former case or the latter case, anyone can not only send simply and instantaneously the individual data for each individual to the individual data registration unit 4 so as to set and register the individual identification means for each individual data, but also simultaneously set and register either the individual password or the individual identification code, either of which becomes a key code, to construct instantaneously an individual security system.

Further, where the individual identification means are, for example, signals which are obtained by identifying and encoding at least part of the human body of an individual sent together with the individual data sequentially inputted through various communication means connected to the information data overall control unit 3, there exists an advantage that a more reliable security system can be constructed without using entirely the principal confirmation medium such as various identification cards, and at the same time, various goods and the like can be silently sent/received, and particularly, there occurs another advantage in transaction that the tie-up with various financial institutions can be satisfactorily performed.

Further, the reservation order of the reservation control apparatus practicing the method of controlling the reservation for goods and the like in the present invention is never limited to the above-mentioned embodiments, and for example, for any reservation control apparatus which can set and resister individual identifying means for each individual corresponding to individual data of an unspecified number of the general public; thereafter reserve tangible and/or intangible various goods and the like controlled by information data control units 2 from an individual whose individual identifying means have been set and registered, through communication means; thereafter set a reservation code to the reservation data for each of various goods and the like reserved and notifying the individual; thereafter receive various urgent information data such as the change or cancel of the reservation data to which the reservation code has been set from at least one of the individual side and the information data control unit 2 side, and change or cancel the contents of the reservation data; and thereafter send through the communication means the contents of the reservation data to notify the individual, the information data overall control unit 3 is not always interposed there between, each individual may directly send the individual data and the like to respective information data control units 2 for controlling individually various goods and the like so as to be given a reservation code to which various conditions such as goods receiving data and quantity have been set, and even in this case, there exists an advantage that where there occurs a situation in that the contents and the like of various goods such as reserved goods and services are changed by the reserving party side, as well as even where an emergency situation such as various troubles occurs on the other party side for providing various goods such as reserved goods and services, the apparatus can not only achieve smoothly the purpose of the both parties in real time for 24 hours, but particularly also perform reliably the final confirmation for the reservation contents for each individual having performed reservation.

Further, the reservation order of the reservation control apparatus practicing the method of controlling the reservation for goods and the like in the present invention is not always limited to the above-mentioned embodiments, and the reservation for various goods and the like may be performed by using the reservation code previously set for each of tangible and/or intangible various goods and the like controlled by the information data control units 2, and thus the reservation in this case is performed by setting and registering individual identifying means for each individual corresponding to individual data of an unspecified number of the general public; thereafter sending a reservation code previously set for each of tangible and/or intangible various goods and the like controlled by the information data control units 2 through communication means from an individual whose individual identifying means have been set and registered to reserve various goods and the like; thereafter receiving various urgent information data such as the change or cancel of the reservation data for each of various goods and the like reserved from at least one of the individual side and the information data control unit 2, and changing or canceling the contents of the reservation data; and thereafter sending through the communication means the contents of the reservation data to notify the individual.

Even in this case, there exists an advantage that where there occurs a situation in that the contents and the like of various goods such as reserved goods and services are changed by the reserving party side, as well as even where an emergency situation such as various troubles occurs on the other party side for providing various goods such as reserved goods and services, the apparatus can not only achieve reliably the purpose of the both parties in real time for 24 hours, but particularly also perform reliably and smoothly the final confirmation for the reservation contents for each individual having performed reservation.

Thus, as a procedure of reserving various goods and the like by using the reservation code previously set for each of tangible and/or intangible various goods and the like controlled by the information data control units 2, the procedure in the following case may be also considered.

That is, the reservation order of the reservation control apparatus may be such that all reservation codes sent through the communication means from each individual and previously set for each of various goods and the like are inputted into the information data overall control unit 3, and thereafter, where the information data on various goods and the like applicable to the reservation codes have been stored in the information data overall control unit 3, the reservation is performed by the information data overall control unit 3, thereafter the reservation codes are sent to a specified information data control unit 2 controlling various reserved goods and the like to store them; where the information data on various goods and the like applicable to the reservation codes have not been stored in the information data overall control unit 3, the information data control unit 2 controlling various goods and the like applicable to the reservation codes is notified of the effect and performs reservation, and thereafter the information data on various goods and the like applicable to the reservation codes are sent from the information data control unit 2 to the information data overall control unit 3; and it will be appreciated that even this case has the above-mentioned series of advantages.

Further, it will be appreciated that in the above-mentioned embodiments, the specific configuration of the communication means is never limited to the telephone lines using wire communication and/or wireless communication, and where an electromagnetic wave is used for communication means, the type of the electromagnetic wave transmitted and received may be amplitude modulation or frequency modulation wave, or any of short, medium and micro wave.

Further, although in the above-mentioned embodiments, the reservation control apparatus 1 is configured such that the information data overall control unit 3 includes the individual data registration unit 4, the address registration unit 5, the reservation data allocation unit 6, the reservation data control unit 9 and the reservation data changed contents notification unit 11, and that the information data control unit 2 is provided with the reservation code setting unit 7 and the reservation code sending unit 8, it will be appreciated that the apparatus is not always limited to the above-mentioned configuration, and for example, the reservation code setting unit and the reservation code sending unit may be controlled by the information data overall control unit 3, and the existing place and control rout of various units configuring the information data overall control unit 3 and the information data control unit 2 are never limited.

### Fourth Embodiment

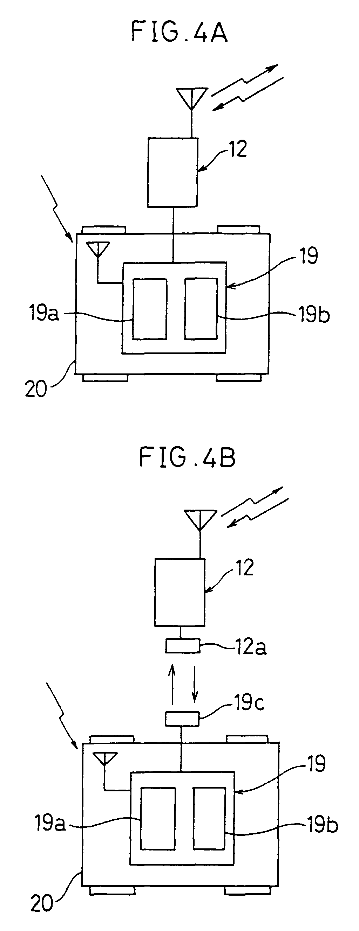

Further, as shown in Fig. 4 A, the reservation unit 12 may be provided to a navigation unit 19 including position detector means using a position detection unit 19a of such as GPS system, autonomous navigation system and hybrid system for detecting the current position of a mobile body 20 such as a vehicle and position disclosure means for disclosing the position of the mobile body 20 detected through the position detector means by a monitor 19b and the like, and in this case, there exists an advantage that the reservation of tangible and/or intangible goods can be simply and reliably performed in real time for 24 hours from the mobile body 20 such as a vehicle, and even where there occurs a situation in that the contents and the like of various goods such as reserved goods and services are changed by the reserving party side, as well as even where an emergency situation such as various troubles occurs on the other party side for providing various goods such as reserved goods and services, the change of reserved various goods can be immediately performed in the mobile body 20 such as a vehicle.

As further advantages, the confirmation for the reservation contents of changed various goods and the like can be instantaneously and reliably performed; and further, where the above-mentioned reserved goods are, for example, reserves various accommodations for hotels and the like, and reserved various restaurants and the like, anyone reserving the goods can be easily and reliably guided through the navigation unit 19 provided within the mobile body 20 to the intended accommodation or restaurant, and can immediately select and reserve various accommodations for hotels and the like, or various restaurants and the like dotted in a specified area such as a final intended place of the mobile body 20 through the navigation unit 19.

### Fifth Embodiment

Further, as shown in Fig. 4B, the reservation unit 12 and the navigation unit 19 may be configured removably through connection units 12a and 19c provided on both the above units, respectively, and in this case, there exists an advantage in goods popularization that the reservation unit 12 can be simply mounted to, for example, vehicle manufacturer's genuine navigation units 19 or generally available various navigation units 19 and immediately used without performing any troublesome modification and the like.

### Sixth Embodiment

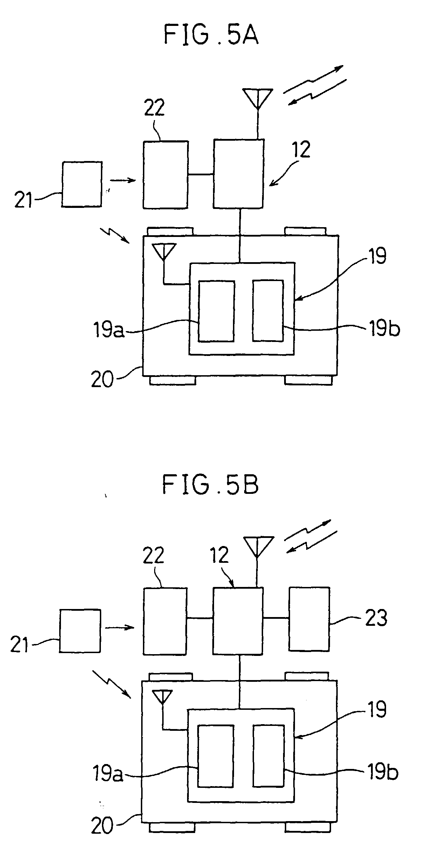

Further, as shown in Fig. 5 A, the reservation unit 12 may be provided with a information take-in unit 22 capable of taking in the information on specified goods and like from a storage medium 21 such as a magnetic disk and a magnetic tape for storing the information on tangible and/or intangible various goods and the like to which reservation codes have been set

In this case, although there exists an advantage that the information on various goods and the like can be widely popularized through the storage medium 21 to general consumers and the like, and at the same time, the change or addition of the information contents can be coped with by sequential version up, and further, with the storage medium 21 made available for each field of various goods and the like, the reserving party can select the storage medium 21 matched with the purpose on the side of reserving various goods and the like to utilize it efficiently, the reservation unit 12 is not always provided with the information take-in unit 22, and the information take-in unit 22 may be provided on the navigation unit 19, and in a word, it is sufficient that the information take-in unit 22 is provided on at least one of the reservation unit 12 and the navigation unit 19.

### Seventh Embodiment

Further, as shown in Fig. 5B, the reservation unit 12 may be provided with an information data rewrite unit 23 capable of rewriting the information within the storage medium 21, and in this case, there exists an advantage that the user side can simply perform the edition and the like of the information within the storage medium 21 according to the purpose and usage on the reserving side; and for example, the information data rewrite unit 23 may be configured so as to be able to rewrite the information within the storage medium 21 through a specified rewrite signal (not shown) sent from the information data overall control unit 3.

In this case, although there exists an advantage that the change or addition of the information contents within the storage medium 21 can be rewrote automatically and in real time to the latest contents without making available sequentially the version-up storage medium 21 for the change or addition of the information contents by the reserving party side or without any trouble of rewriting, the reservation unit 12 is not always provided with the information data rewrite unit 23, and the information data rewrite unit 23 may be provided on the navigation unit 19, and in a word, it is sufficient that the information data rewrite unit 23 is provided on at least one of the reservation unit 12 and the navigation unit 19.

### Other Embodiments

Further, in the above-mentioned embodiments, the reservation control unit is used to reserve goods, but not always limited to such application, and for example, not only such reservation control unit but also the information data control unit can also be applied to the control reservation of various data on various goods and the like, and of the basic data of said various data.

That is, the present invention comprises the steps of: setting and registering individual identification means for each individual or corporation applicable to individual or corporation data, respectively, of an unspecified number of the general public; performing control reservation or control setting of the basic data of various data in specified information data control units 2 from said individual or corporation to at least one of said information data control units 2 and an information data overall control unit 3 for controlling said information data control units 2 in order to allow said information data control units 2 to control the basic data of various data on tangible and/or intangible various goods and the like previously controlled by individual or corporation whose individual identification means have been set and registered; receiving various urgent information data from said individual or corporation side, or the information data control unit 2 side where a difference occurs between the basic data of various data controlled by the information data control units 2 and the actual data of various data sent from said individual or corporation to at least one of the information data control units 2 and the information data overall control unit 3 for controlling said information data control units 2, or where the change, cancel or the like of the basic data of various data occurs; and sending the urgent information data through the communication means to relevant individual or corporation to notify.

Thus, the present invention has an advantage that not only when there occurs a situation such that the contents of the control reservation of the basic data of various data on various goods and the like are changed by the reserving-party side, or when a difference occurs between the controlled and reserved basic data and the actual data, but also when there occurs an urgent situation such as various troubles such that the basic data of the reservation-controlled various data are changed by the controlling-party side, the urgent situation such as various troubles can be smoothly solved in 24-hour real time by being understood by both the parties to achieve reliably the purpose intended by both the parties, and in addition, particularly, the contents of the control reservation of the basic data can be finally and reliably checked for each individual or corporation who performed the control reservation of the basic data of various data.

Further, other than being used as described above, the present invention may be used as follows:

That is, the present invention may be used with the steps of: setting and registering individual identification means for each individual or corporation applicable to individual or corporation data, respectively, of an unspecified number of the general public; performing the control reservation or control setting from said individual or corporation side for the basic data of various data on tangible and/or intangible various goods and the like previously controlled by at least one of the specified information control units 2 and the information data overall control unit 3 for controlling said information data control units 2, receiving various urgent information data from said individual or corporation side, or the information data control unit 2 side where a difference occurs between the basic data of various data controlled by the information data control units 2 and the actual data of various data sent from said individual or corporation to at least one of the information data control units 2 and the information data overall control unit 3 for controlling said information data control units 2, or where the change, cancel or the like of the basic data of various data occurs, owing to the reservation control or reservation setting performed; and sending the urgent information data through the communication means to relevant individual or corporation to notify.

Thus, even where the present invention is used in the above-mentioned manner, the present invention has an advantage that not only when there occurs a situation such that the contents of the control reservation of the basic data of various data on various goods and the like are changed by the reserving-party side, or when a difference occurs between the controlled and reserved basic data and the actual data, but also when there occurs an urgent situation such as various troubles such that the basic data of the reservation-controlled various data are changed by the controlling-party side, the urgent situation such as various troubles can be smoothly solved in 24-hour real time by being understood by both the parties to achieve reliably the purpose intended by both the parties, and in addition, particularly, the contents of the control reservation of the basic data can be finally and reliably checked for each individual or corporation who performed the control reservation of the basic data of various data.

Therefore, such device, when applied to the control reservation of various data and the like as described above, has an advantage that for example, in various amusement centers, not only a difference between the basic data such as the number of balls discharged from or the number of coins discharged from a game machine and the actual data such as the number of balls discharged from or the number of coins discharged from a game machine obtained in unjust manner but also the initial setting of the basic data according to the replacement of the machine with a new one can be reliably controlled by the information data control unit in a police station, a security company and the like to assist the prevention of crime, and in addition, another advantage that the basic data and actual data of various data are sent in real time or for each specified date and the like to at least one of the information data control units 2 and the information data overall control unit 3 for controlling said information data control units 2, so that the basic data of various data can be more precisely and quickly controlled.

The specific installation place, structure and function of units configuring the reservation control apparatus practicing the method of controlling the reservation for goods and the like of the present invention are never limited, and further, all the specific configurations of members configuring other units can be also arbitrarily design changed within the scope intended by the present invention; and the scope of utilizing the reservation control apparatus capable of being used in real time for 24 hours is also never limited, and for example, the apparatus become applicable to all reservations for tangible and/or intangible various goods and the like including: the reservation for the medical examination or accommodations of hospitals and the like, the reservation for various tickets, the reservation for events, the reservation for goods purchase, the reservation for services related to transportation, as well as the reservation in service industry such as the reservation for the collection/distribution of home delivery and the like, the reservation for the seat or meal delivery related to eating and drinking, the reservation for design drawings in various field or for the execution of the civil/architectural work related to construction, and the reservation for the lecture, lesson schedule and the like related to various private classes and schools.

Further, it will be appreciated that the reservation unit 12 or the reservation data changed contents notification unit 11 used in the reservation control apparatus 1 may be provided integrally to communication apparatus such as various general cellular phones and radio pagers; further, the information data sent to the individual side performing reservation are not always limited to only the data on the reservation status and the number of possible reservations for each of various goods and the like; and for example, various information in advance such as the information on various events to be performed next time and on new goods which are not directly related to the reservation at present time may be sent continuously or discontinuously to the individual side; and in such a case, the opinion or impression for each individual may be transmitted through a special identification code to at least one of a specified information data control unit and the information data overall control unit, and in this case, there exists a great advantage that, for example, the opinion from specific membership organizations and general consumers on the basis of the information data thus sent can be heard instantaneously and in real time for 24 hours, and particularly, the apparatus can be used to obtain valuable data on specified enterprises and the like who plan and operate various events and new goods.

Although in the above-mentioned embodiments, the individual data have been intended for natural person of an unspecified number of the general public, it will be appreciated that the individual data may be intended for corporations of various enterprises and the like.

This specification is by no means intended to restrict the present invention to the preferred embodiments set forth therein. Various modifications to the method and apparatus of the present invention, as described herein, may be made by those skilled in the art without departing from the spirit and scope of the present invention as defined in the appended claims.

## Claims

1. A method of controlling the reservation for goods and the like comprising the steps of:
setting and registering individual identification means for each individual applicable to individual data of an unspecified number of the general public;
reserving tangible and/or intangible various goods and the like controlled by an information data control unit (2) from an individual whose individual identification means have been set and registered, through communication means;
setting a reservation code to the reservation data for each of various goods and the like reserved and notifying said individual;
receiving various urgent information data such as the change or cancel of the reservation data to which the reservation code has been set from at least one of the individual side and the information data control unit (2) side, and changing or canceling the contents of the reservation data; and
sending through the communication means the contents of the reservation data to notify the individual.

2. A method of controlling the reservation for goods and the like comprising the steps of:
setting and registering individual identification means for each individual applicable to individual data of an unspecified number of the general public;
sending a reservation code previously set for each of tangible and/or intangible various goods and the like controlled by an information data control unit (2), and reserving various goods and the like from an individual whose individual identifying means have been set and registered, through communication means;
receiving various urgent information data such as the change or cancel of the reservation data of various reserved goods and the like from at least one of the individual side and the information data control unit (2) side, and changing or canceling the contents of the reservation data; and
sending through the communication means the contents of the reservation data to notify the individual.

3. A method of controlling the reservation for goods and the like as set forth in any one of claims 1 and 2, wherein before the contents of said reservation data are changed or canceled, there is notified of the fact that various urgent information data have been inputted into at least one of the individual side and the information data control unit (2) side.

4. A method of controlling the reservation for goods and the like as set forth in any one of claims 1 to 3, wherein the change or cancel of said reservation data is performed after inputting of various urgent information data and after receiving of an urgent data acknowledgment data inputted from at least one of the individual side and the information data control unit (2) side.

5. A method of controlling the reservation for goods and the like as set forth in any one of claims 1 to 4, wherein said information data control units (2) are distributed to specified places so that various information data for each of tangible and/or intangible various goods and the like are to be controlled for each of various goods and the like; and that each of the information data control units (2) is centralizedly controlled in real time or for each specified date and the like by an information data overall control unit (3) capable of reading or storing the information data of each information data control unit (2).

6. A method of controlling the reservation for goods and the like as set forth in clam 5, characterized in that at least one of said information data control unit (2) and said information data overall control unit (3) sends various information data of tangible and/or intangible various goods and the like controlled thereby through communication means to the individual side to provide information.

7. A method of controlling the reservation for goods and the like as set forth in claim 6, wherein said information data are displayed at individual option.

8. A method of controlling the reservation for goods and the like as set forth in any one of claims 5 to 7, wherein all reservations for various goods and the like sent through said communication means from each individual are inputted into the information data overall control unit (3), and thereafter, where the information data on various goods and the like applicable to reservation have been stored in said information data overall control unit (3), a reservation code for each of various reserved goods and the like is set to notify said individual, and at the same time, the reservation code and the reservation data are sent to the information data control unit (2) controlling applicable various goods and the like to store them; where the information data on various goods and the like applicable to reservation have not been stored in the information data overall control unit (3), the information data control unit (2) controlling applicable various goods and the like is notified of the effect, and the reservation code is set to the reservation data on various goods and the like by the information data control unit (2) to send the reservation code to the information data overall control unit (3), thereby notifying individual of the reservation code for reserved various goods and the like from said information data overall control unit (3).

9. A method of controlling the reservation for goods and the like as set forth in any one of claims 5 to 7, wherein all reservation codes sent through said communication means from each individual and previously set for each of various goods and the like are inputted into the information data overall control unit (3), and thereafter, where the information data on various goods and the like applicable to the reservation codes have been stored in said information data overall control unit (3), the reservation is performed by the information data overall control unit (3), thereafter said reservation codes are sent to a specified information data control unit (2) controlling various reserved goods and the like to store them; where the information data on various goods and the like applicable to the reservation codes have not been stored in the information data overall control unit (3), the information data control unit (2) controlling various goods and the like applicable to the reservation codes is notified of the effect and performs reservation, and thereafter the information data on various goods and the like applicable to the reservation codes are sent from said information data control unit (2) to the information data overall control unit (3).

10. A method of controlling the reservation for goods and the like comprising the steps of: setting and registering individual identification means for each individual or corporation applicable to individual or corporation data, respectively, of an unspecified number of the general public; performing control reservation or control setting of the basic data of various data in specified information data control units (2) from said individual or corporation to at least one of said information data control units (2) and an information data overall control unit (3) for controlling said information data control units (2) in order to allow said information data control units (2) to control the basic data of various data on tangible and/or intangible various goods and the like previously controlled by individual or corporation whose individual identification means have been set and registered; receiving various urgent information data from said individual or corporation side, or the information data control unit (2) side where a difference occurs between the basic data of various data controlled by the information data control units (2) and the actual data of various data sent from said individual or corporation to at least one of the information data control units (2) and the information data overall control unit (3) for controlling said information data control units (2), or where the change, cancel or the like of the basic data of various data occurs; and sending the urgent information data through the communication means to relevant individual or corporation to notify.

11. A method of controlling the reservation for goods and the like comprising the steps of: setting and registering individual identification means for each individual or corporation applicable to individual or corporation data, respectively, of an unspecified number of the general public; performing at said individual or corporation side the control reservation or control setting for the basic data of various data on tangible and/or intangible various goods and the like previously controlled by at least one of the specified information data control units (2) and an information data overall control unit (3) for controlling said information data control units (2); receiving various urgent information data from said individual or corporation side, or the information data control unit (2) side where a difference occurs between the basic data of various data controlled by the information data control units (2) and the actual data of various data sent from said individual or corporation to at least one of the information data control units (2) and the information data overall control unit (3) for controlling said information data control units (2), or where the change, cancel or the like of the basic data of various data occurs, owing to the control reservation or control setting performed; and sending the urgent information data through the communication means to relevant individual or corporation to notify.

12. A method of controlling the reservation for goods and the like as set forth in any one of claims 10 and 11, characterized in that the basic data and/or actual data of said various data are sent in real time or for each specified date and the like to at least one of the information data control units (2) and the information data overall control unit (3) for controlling said information data control units (2).

13. An apparatus for controlling reservation for various goods and the like comprising:
identical type and/or different type information data control unit (2) group distributed to specified places so that various information data are to be individually controlled on the reservation status, the number of possible reservations and the like for each of various goods and the like on the basis of identification codes set for each of tangible and/or intangible various goods and the like;
an information data overall control unit (3) capable of reading or storing the information data of said each information data control unit (2) in real time or for each specified date and time or the like;
an individual data registration unit (4) for setting and registering individual identification means for each individual corresponding to each individual data of an unspecified number of the general public;
an address registration unit (5) capable of registering communication means for an urgent contact such as telephone number for each individual set and registered;
a reservation data allocation unit (6) for allocating the reservation contents of various goods and the like reserved through the individual identification means and using individual identification codes confirmed as a principal to a specified information data control unit (2) controlling applicable various goods and the like;
reservation code setting units (7) for setting a reservation code to the reservation data including various conditions such as the number of reservations and the delivery date and time of various goods and the like sent to the information data control units (2);
a reservation code sending unit (8) for sending said reservation code to individual side;
a reservation data control unit (9) which receives various urgent information data such as the change or cancel of reservation data to which a reservation code has been set from at least one of the individual side and the information data control unit (2) side and can change and/or cancel the contents of the reservation data to which a reservation code has been set;
a reservation data changed contents sending unit (10) for actuating said address registration unit (5) when some change occurs in the contents of reservation data, and sending the contents of the changed and/or canceled reservation data through specified communication means to respective individuals; and
reservation data changed contents notification units (11) for notifying respective individuals of the reservation data sent through said reservation data changed contents sending unit (10).

14. An apparatus for controlling reservation for various goods and the like as set forth in claim 13, wherein the individual data of an unspecified number of the general public are sent through communication means from the individual side as required.

15. An apparatus for controlling reservation for various goods and the like as set forth in any one of claims 13 and 14, wherein said individual side is provided with reservation units (12) capable of outputting an identification code set for each of various goods and the like and of individual identification means when various goods and the like are reserved.

16. An apparatus for controlling reservation for various goods and the like as set forth in claim 15, wherein said reservation unit (12) is provided with individual data output means for sending individual data to the individual data registration unit (4).

17. An apparatus for controlling reservation for various goods and the like as set forth in any one of claims 15 and 16, wherein said reservation unit (12) and said reservation data changed contents notification unit (11) are integrally provided.

18. An apparatus for controlling reservation for various goods and the like as set forth in any one of claims 15 and 16, wherein at least one of said reservation unit (12) and said reservation data changed contents notification unit (11) is configured so as to be portable.

19. An apparatus for controlling reservation for various goods and the like as set forth in any one of claims 15 to 17, wherein said reservation unit (12) is provided on a navigation unit (19) including means for detecting the position of a mobile body (20) and means for disclosing the position of the mobile body (20) detected through said position detection means.

20. An apparatus for controlling reservation for various goods and the like as set forth in claim 19, wherein said reservation unit (12) is configured so as to be removably provided on the navigation unit (19).

21. An apparatus for controlling reservation for various goods and the like as set forth in any one of claims 19 and 20, wherein an information take-in unit (22) capable of taking in the information on specified goods and the like from a storage medium (21) having stored the information on tangible and/or intangible various goods and the like to which the reservation codes are set is provided on at least one of said reservation unit (12) and said navigation unit (19).

22. An apparatus for controlling reservation for various goods and the like as set forth in any one of claims 19 to 21, wherein an information data rewrite unit (23) capable of rewriting the information within the storage medium (21) is provided on at least one of said reservation unit (12) and said navigation unit (19).

23. An apparatus for controlling reservation for various goods and the like as set forth in claim 22, wherein said information data rewrite unit (23) is configured so as to be able to rewrite the information within the storage medium (21) through a specified rewrite signal sent from the information data overall control unit (3).

24. An apparatus for controlling reservation for various goods and the like as set forth in any one of claims 15 to 23, wherein said reservation unit (12) is provided with an information display and input unit (13) having no keyboard.

25. An apparatus for controlling reservation for various goods and the like as set forth in any one of claims 13 to 24, wherein said individual data registration unit (4), said address registration unit (5), said reservation data allocation unit (6), said reservation code sending unit (8), said reservation data control unit (9) and said reservation data changed contents sending unit (10) are provided on the information data overall control unit (3).

26. An apparatus for controlling reservation for various goods and the like as set forth in any one of claims 13 to 25, wherein said individual identification means are at least one of passwords sent together with individual data to be sequentially inputted through various communication means connected to the information data overall control unit (3) and individual identification codes set sequentially on the information data overall control unit (3) side for individual data.

27. An apparatus for controlling reservation for various goods and the like as set forth in any one of claims 13 to 26, wherein said individual identification means are signals encoded by identifying of at least part of individual human body information sent together with individual data sequentially inputted through various communication means connected to the information data overall control unit (3).

28. An apparatus for controlling reservation for various goods and the like as set forth in any one of claims 13 to 27, wherein said various communication means are telephone lines (14) using wire communication and/or wireless communication.
